## Europäisches Patentamt
## European Patent Office
## Office européen des brevets

(19)

(11) Veröffentlichungsnummer: **0 121 600**
**B1**

(12) **EUROPÄISCHE PATENTSCHRIFT**

(45) Veröffentlichungstag der Patentschrift:
08.04.87

(51) Int. Cl.⁴: **F 16 K 11/06,** F 16 K 39/04, F 15 B 13/04

(21) Anmeldenummer: **83112425.0**

(22) Anmeldetag: **09.12.83**

(54) **Steuerventil.**

(30) Priorität: **10.03.83 DE 3308574**

(43) Veröffentlichungstag der Anmeldung:
**17.10.84 Patentblatt 84/42**

(45) Bekanntmachung des Hinweises auf die Patenterteilung:
**08.04.87 Patentblatt 87/15**

(84) Benannte Vertragsstaaten:
**AT BE CH DE FR GB IT LI LU NL SE**

(56) Entgegenhaltungen:
**DE-A-2 152 830**
**DE-A-2 910 029**
**DE-A-3 000 591**
**GB-A-2 040 410**

(73) Patentinhaber: **Heilmeier & Weinlein Fabrik für Oel- Hydraulik GmbH & Co. KG, Neumarkter Strasse 26, D-8000 München 80 (DE)**

(72) Erfinder: **Brunner, Rudolf, Wankstrasse 23, D-8011 Baldham (DE)**

(74) Vertreter: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

## Beschreibung

Die Erfindung betrifft ein Steuerventil der im Oberbegriff des Patentanspruchs 1 angegebenen Art.

Bei einem aus der DE-A- 2152 830, Fig. 1, bekannten Steuerventil dieser Art sperrt der Kolbenschieber in jeder Steuerstellung den Durchgang vom Druckanschluß zum Ablaufanschluß ab, so daß das Druckmittel mit dem gewünschten Druck in einer gegenüber der Ebene des drucklosen Durchlaufes versetzten Arbeitsebene durch den Kolbenschieber gesteuert wird. Im Druckanschluß steht das Druckmittel mit dem vollen Arbeitsdruck an der Umfangsfläche des Kolbenschiebers an, während der gegenüberliegende Ablaufanschluß drucklos ist. Insbesondere bei Verwendung eines solchen Steuerventils in einem Hochdruck-Hydraulik-System werden Verstellbewegungen des Kolbenschiebers durch einen unbefriedigenden Druckausgleich vorallem in der Ebene des drucklosen Durchlaufes behindert. Ein verbesserter Druckausgleich am Kolbenschieber wird gemäß Fig. 6 der DE-A- 2152 830 angestrebt, in dem der drucklose Durchlauf über zwei zueinander parallel in derselben Axialebene den Kolbenschieber durchsetzende Durchgangskanäle, in denen das Druckmittel mit einander entgegengesetzten Strömungsrichtungen strömt, verläuft. Der bauliche Aufwand ist hierfür jedoch außerordentlich groß. Zudem ergeben sich hohe Strömungswiderstände bei drucklosem Durchlauf, die unerwünscht sind. Der Druckausgleich ist weiterhin unbefriedigend, da der Kolbenschieber in den Steuerstellungen mit einem Drehmoment belastet wird. Wenn in einem Gehäuse eines Steuerventiles mehrere Kolbenschieber in voneinander getrennten Gehäusebohrungen angeordnet sind, wird bei gleichzeitiger Verstellung dieser mehreren Kolbenschieber der Druckausgleichseffekt aufgehoben.

Es wurde bisher davon ausgegangen, daß der Kolbenschieber verklemmt wird, wenn der Arbeitsdruck den Kolbenschieberumfang im Druckanschluß belastet, während in der Wirkfläche des Ablaufanschlusses eine entgegengesetzt gerichtete Belastung am Kolbenschieberumfang fehlt. Bei einem aus der DE-A- 2910 029 bekannten Steuerventil liegen deshalb in der Gehäusebohrungswand dem Druckanschluß Ausnehmungen diametral gegenüber, die mit dem Druckanschluß in Verbindung stehen und die Wirkfläche des Druckanschlusses kompensieren. In den Steuerstellungen steht in diesen Ausnehmungen der Druck aus dem Druckanschluß an nur in entgegengesetzter Richtung, so daß eigentlich ein Druckausgleich zu erwarten ist. Es zeigt sich aber in der Praxis, daß in der Ebene des drucklosen Durchlaufes trotzdem kein befriedigender Druckausgleich erreichbar ist. Vermutlich verteilt sich trotz hochwertigen Materials und hoher Fertigungspräzision das Druckmittel zwischen der Umfangsfläche des Kolbenschiebers und der Gehäusebohrungswand, so daß über den Umfang des Kolbenschiebers im wesentlichen der gleiche Druck herrscht, wie auch im Druckanschluß. Allein im Bereich der Wirkfläche des drucklosen Ablaufanschlusses wirkt dieser Druck nicht, woraus eine einseitige Kraft resultiert, die den Kolbenschieber in der Gehäusebohrung zu verklemmen sucht.

> Der Erfindung liegt das technische Problem zugrunde, ein Steuerventil der eingangs genannten Art zu schaffen, das sich durch einen besseren Druckausgleich, insbesondere in der Ebene des drucklosen Durchlaufes, auszeichnet, als die bekannten Steuerventile.

Das gestellte Problem wird erfindungsgemäß durch die im kennzeichnenden Teil des Patentanspruchs 1 angegebene Merkmale gelöst.

Bei dieser Ausbildung wird unter der Voraussetzung, daß sich der im Druckanschluß anstehende Druck ohnedies um den Kolbenschieberumfang verteilt und nur in der Wirkfläche des Ablaufanschlusses fehlt, an der dem Ablaufanschluß gegenüberliegenden Seite im Entlastungsbereich Druckgleichheit mit dem Ablaufanschluß erreicht. Auf diese Weise wird überraschend einfach das Entstehen einer einseitig wirkenden Kraft von vornherein unterbunden. Der Kolbenschieber ist auch bei großer Fördermenge und hohem Systemdruck aus einer Steuerstellung leichtgängig zu verstellen.

Der Druckausgleich für den Kolbenschieber soll ohne grundlegende Änderung des Aufbaus des Steuerventils und ohne nennenswerte Steigerung der Herstellungskosten erreicht werden. Dies ist gemäß Anspruch 2 gut zu realisieren. Die Ausnehmungen in der Bohrungsinnenwand und die Ausbildung der Kanäle, die die Ausnehmungen mit dem Ablaufanschluß verbinden, lassen sich einfach und preiswert anbringen. Der Kolbenschieber bedarf keiner konstruktiven Änderung.

Wichtig ist dabei die Maßnahme von Anspruch 3, damit der Entlastungsbereich sich bei der Bewegung des Kolbenschiebers nicht mit für das Arbeiten des Steuerventils verantwortlichen Strömungswegen überschneidet.

Eine weitere Ausführungsform geht aus Anspruch 4 hervor. Hier sind nur am Kolbenschieber geringfügige bauliche Maßnahmen vorzusehen, die die Funktion des Kolbenschiebers nicht beeinträchtigen und zudem für ihn eine optimale kurze Baulänge zulassen.

Gemäß Anspruch 5 wird vermieden, daß sich die Ausnehmungen mit den Strömungswegen im Gehäuse überschneiden.

Dabei sind die Maßnahmen von Anspruch 6 wichtig. Durch die Vergrößerung der dem Ablaufanschluß zugewandten Mündung des Durchgangskanals wird sichergestellt, daß bei bereits versperrtem Druckanschluß noch eine Verbindung zwischen dem Durchgangskanal und dem Ablaufanschluß offen ist und sich der Druck im Durchgangskanal bis auf die Druckhöhe im Ablaufkanal abbaut, damit auch die Entlästungsbereiche drucklos bleiben.

Eine weitere, zweckmäßige Ausführungsform eines erfindungsgemäßen Steuerventils, bei dem für die Arbeitsströmungssteuerung ein Pumpenanschluß, wenigstens ein Verbraucheranschluß, im Kolbenschieber angeordnete Strömungsführungskanäle und ein dem Verbraucheranscnluß zugeordneter Rücklauf vorgesehen sind, geht aus Anspruch 7 hervor. Bei derartigen Steuerventilen ist der Rücklauf drucklos bzw. mit der Strömungsführung für den drucklosen Durchlauf abströmseitig des Kolbenschiebers in Strömungsverbindung. Durch die Verbindung der Ausnehmungen mit dem jeweiligen Rücklauf wird auf einfache Weise erreicht, daß der Entlastungsbereich drucklos bleibt.

Eine weitere, zweckmäßige Ausführungsform eines erfindungsgemäßen Steuerventils, bei dem die Enden der Gehäusebohrung den Verbraucheranschlüssen zugeordnete Rückläufe bilden, die gegenüber den Verbraucheranschlüssen durch die Stirnenden des Kolbenschiebers abtrennbar sind, geht aus Anspruch 8 hervor. Die Ausnehmungen stehen ständig mit den Rückläufen in Verbindung, so daß der Entlastungsbereich druckentlastet bleibt.

Bei modernen Steuerventilen dieser Art sind das Gehäuse und der Kolbenschieber sehr kurz. Auch die Überdeckungsbereiche sind außerordentlich kurz. Bei einer vorteilhaften Ausführungsform gemäß Anspruch 9 kann diese moderne Bauweise der Steuerventile beibehalten werden, da die Entlastungsbereiche in axialer Richtung kurz sind.

Eine weitere, vorteilhafte Ausführungsform eines erfindungsgemäßen Steuerventils geht aus Anspruch 10 hervor. Bei diesem Steuerventil ist in der Ebene des drucklosen Durchlaufes im Gehäuse jedem Verbraucheranschluß ein die Gehäusebohrung durchsetzender durchgehender Rücklaufkanal zugeordnet, der in derselben Axialebene wie der Verbraucheranschluß liegt. Im Kolbenschieber ist ein Strömungskanal ausgebildet, der in jeder Steuerstellung des Kolbenschiebers einen Verbraucheranschluß mit seinem zugeordneten Rücklaufkanal verbindet. Dies führt zu einem kurzen Gehäuse und einem kurzen Kolbenschieber und ermöglicht eine einfache Verbindung aller Rücklaufkanäle,wenn mehrere Steuerventile batterieartig aneinandergesetzt sind. Wenn dann die Merkmale von Anspruch 10 vorliegen, wird der Druckausgleich für den Kolbenschieber ohne nennenswerten baulichen Mehraufwand erreicht. Es genügt, die Mündung der dem Ablaufanschluß gegenüberliegenden Rücklaufkanäle in die Gehäusebohrung so azubilden, daß die kompensierenden Entlastungsbereiche entstehen.

Eine zweckmäßige Ausführungsform von der Erfindung geht auch aus Anspruch 11 hervor. Mit diesem die Wirkung des Entlastungsbereichs kompensierenden Bereich wird erreicht, daß bei mehreren hintereinander geschalteten Steuerventilen dann, wenn ein in Strömungsrichtung hintenliegendes Steuerventil in seiner Steuerstellung steht und deshalb in allen davorliegenden Steuerventilen im Zulaufanschluß und im Ablaufanschluß der gleiche Hochdruck, nämlich der Arbeitsdruck herrscht, der kompensierende Bereich dank der Druckentlastung zum Rücklauf den druckentlasteten Entlastungsbereich kompensiert, aus dessen Wirkung andernfalls erneut eine einseitige Kraft am Kolbenschieber resultieren würde, die bei einer Verstellung des Kolbenschiebers aus der Neutralstellung in eine Steuerstellung die Stellbewegung erschwert. Dieser Entlastungsbereich braucht nur über einen kurzen Hubweg des Kolbenschiebers wirksam zu sein, nämlich bei der anfänglichen Bewegung aus der Neutralstellung in Richtung auf eine Steuerstellung zu. Danach, d.h. wenn er nicht mehr mit dem Rücklauf in Verbindung steht, wird dieser kompensierende Bereich keinen Einfluß mehr auf die Stellbewegung des Kolbenschiebers haben.

Baulich läßt sich dieses vorerwähnte Ziel besonders einfach gemäß Anspruch 12 lösen. Diese beiden Ausnehmungen können einfache Senkbohrungen mit im Querschnitt kegelförmiger Gestalt sein. Durch die Überschneidung mit dem Rücklauf wird gewährleistet, daß in der Neutralstellung die Wirkfläche des Entlastungsbereiches, der ebenfalls druckentlastet ist, kompensiert wird.

Schließlich geht eine weitere, zweckmäßige Ausführungsform der Erfindung, bei der benachbart zu jedem Verbraucheranschluß zwischen dem Verbraucheranschluß und dem Pumpenanschluß wenigstens eine umlaufende Druckausgleichsnut in der Bohrungswand vorgesehen ist, aus Anspruch 13 hervor.Diese Druckentlastungsnuten haben die Aufgabe, den eingangs erwähnten, sich zwischen der Kolbenschieberumfangsfläche und der Bohrungsinnenwand einwandernden Druck zu verteilen und auch axiale Bereiche des Kolbenschieberumfanges, in denen eine hohe Druckbelastung herrscht, exakt von solchen Bereichen abzugrenzen, in denen nur ein niedrige Druckbelastung herrscht. Im Zusammenspiel mit dem Entlastungsbereich und dem kompensierenden Bereich ergibt sich die Wirkung, daß bei einer Bewegung des Kolbenschiebers, bei der eine Überschneidung zwischen jeweils einer Druckausgleichsnut und den kompensierenden Ausnehmungen erfolgt, diese in ihrer Auswirkung abschwächt.

Nachstehend werden anhand der Zeichnungen Ausführungsformen der Erfindung erläutert. Es zeigen:

Fig. 1 eine erste Ausführungsform eines Steuerventils im Längsschnitt, in der Neutralstellung,

Fig. 2 eine um 90 Grad gedrehte Schnittansicht des Steuerventils von Fig. 1,

Fig. 3 einen Teil eines Längsschnitts durch eine weitere Ausführungsform,

Fig. 4 einen Teil eines Längsschnitts durch eine weitere Ausführungsform,

Fig. 5 einen Teil eines Längsschnitts durch eine weitere Ausführungsform,

Fig. 6 einen Teil eines Längsschnitts durch eine weitere Ausführungsform,

Fig. 7 einen Teil eines Längsschnitts durch eine weitere Ausführungsform,

Fig. 8 einen Teil eines Längsschnitts durch eine weitere Ausführungsform eines Steuerventils, entsprechend der Darstellung von Fig. 2,

Fig. 9 einen um 90 Grad gedrehten Teil eines Längsschnitts durch das Steuerventil von Fig. 8, und

Fig. 10 eine schematische Schnittansicht einer weiteren Ausführungsform.

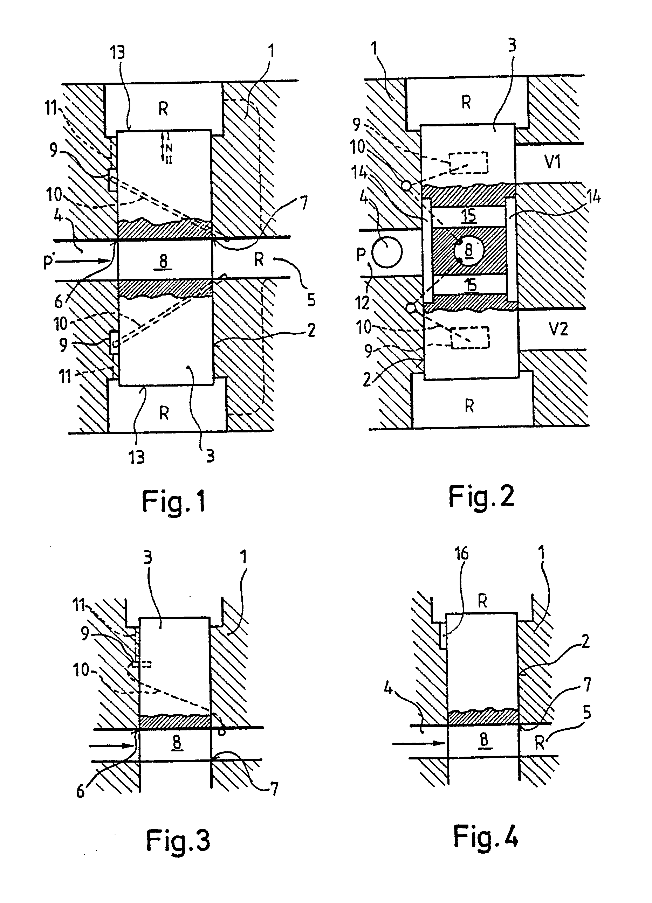

In einem Steuerventil 1 gemäß Fig. 1 und 2 ist in einem Gehäuse 1 in einer Gehäusebohrung 2 ein verdrehgesicherter Kolbenschieber 3 aus einer Neutralstellung N in eine erste und zweite Steuerstellung I und II verschiebbar.

In der Ebene des sogenannten drucklosen Durchlaufes (Fig. 1) steht in einem Druckkanal 4 Druck an (Pfeil P'). Der Druckkanal 4 mündet mit einem Druckanschluß 8 in die Gehäusebohrung 2. Dem Druckanschluß 6 diametral gegenüberliegend führt ein Ablaufanschluß 7 zu einem Ablaufkanal 5, der entweder mit einem Rücklaufsystem (R) verbunden oder drucklos ist. Im Kolbenschieber 3 ist ein Durchgangskanal 8 ausgebildet, der in der Neutralstellung den Druckanschluß 6 mit dem Ablaufanschluß 7 verbindet.

Dem Ablaufanschluß 7 liegen in Richtung der Bohrungslängsachse symmetrisch zu beiden Seiten des Druckanschlusses 6 zur Gehäusebohrung 2 hin offene Ausnehmungen 9 diametral gegenüber. Jede Ausnehmung 9 steht über einen im Gehäuse verlaufenden Kanal 10 mit dem Ablaufanschluß 7 bzw. dem Ablaufkanal 5 in Verbindung.

Die Enden der Gehäusebohrung 2 bilden bei dieser Ausführungsform Rückläufe R, die durch die mit 13 bezeichneten Stirnenden des Kolbenschiebers begrenzt werden. Strichliert ist angedeutet, daß die Rückläufe R mit dem Ablaufkanal 5 verbunden sein können. Alternativ dazu könnten für die Rückläufe selbständige Abflußleitungen vorgesehen sein.

In Fig. 1 ist bei 11 eine alternative Strömungsverbindung strichliert angedeutet, die anstelle der Kanäle 10 die Ausnehmungen 9 mit den Rückläufen R verbindet.

Die Arbeitsebene des Steuerventils (Fig.2) ist um 90 Grad gegenüber der Ebene des drucklosen Durchlaufes (Fig. 1) gedreht. In der Arbeitsebene führt im Gehäuse 1 ein Pumpenkanal 12 zur Gehäusebohrung 2, von dem der Druckkanal 4 abzweigt. Im Pumpenkanal 12 herrscht der Pumpendruck P. Dem Pumpenkanal 12 diametral gegenüberliegend und in Kolbenschieberlängsrichtung jeweils dazu versetzt sind Verbraucheranschlüsse V 1 und V 2 angeordnet, die zu nichtdargestellten Verbauchern führen.

Im Kolbenschieber 3 sind in der Arbeitsebene vor dem Pumpenkanal 12 eine Strömungsführungstasche 14 und an der gegenüberliegenden Kolbenschieberseite ebenfalls eine Strömungsführungstasche 14 ausgebildet, die mit Kanälen 15 verbunden sind. Zwischen den Kanälen 15 verläuft unter 90 ° der Durchgangskanal 8.

Die Ausnehmungen 9 sind strichliert angedeutet. Sie sind über die Kanäle 10 mit dem in der Zeichenebene liegenden Ablaufkanal 5 verbunden.

In Fig. 1 und 2 steht Druck des Pumpenkanals 12 in beiden Strömungsführungstaschen 14 an. Das Druckmittel nimmt jedoch den Weg in den Druckkanal 4 und strömt durch den Durchgangskanal 8 in den Ablaufkanal 5. Der Pumpendruck wird abgebaut. Über die Kanäle 10 bzw. 11 sind auch die Ausnehmungen 9 entlastet.

Sobald der Kolbenschieber 3 in der Zeichnung nach oben in seine Steuerstellung I verschoben wird, sperrt seine Umfangsfläche 3 den Druckanschluß 6 ab. Der Ablaufkanal 5 bleibt weiterhin druckentlastet. Es erfolgt ein rascher Druckaufbau im Pumpenkanal 12. Durch die in Fig. 2 rechte Strömungsführungstasche 14 strömit das Druckmittel in den Verbraucheranschluß V 1. Gleichzeitig gibt das untere Stirnende 13 des Kolbenschiebers die Mündung des Verbraucheranschlusses V 2 frei, so daß aus diesem Druckmittel in den unteren Rücklauf R abströmen kann.

In der Steuerstellung I wirkt der Druck auch im Druckanschluß 6 und sucht sich einen Weg um den Kolbenschieberumfang herum. Daß heißt, er verteilt sich um den Kolbenschieberumfang. Im Bereich des Ablaufanschlusses 7 wird er nicht wirksam, da dieser druckentlastet ist. In gleicher Weise wird der Druck auch nicht in den Ausnehmungen 9 wirken, da sie druckentlastet sind. Die beiden Ausnehmungen 9 (siehe Fig. 2) bilden drucklose Entlastungsbereiche an der Umfangsfläche des Kolbenschiebers 3, die die drucklose Wirkfläche des Ablaufanschlusses 7 insofern kompensieren, als sich aus dem auf der Kolbenschieberumfangsfläche wirksamen Druck keine einseitige Kraft entwickeln kann. Der Kolbenschieber läßt sich demzufolge leichtgängig aus der Steuerstellung verstellen.

Bei der Ausführungsform gemäß Fig. 3 sind die Ausnehmungen 9' (von denen nur die obere gezeigt ist) als in axialer Richtung enge Bogenschlitze ausgebildet, die sich über eine Teil der Gehäusebohrungswand in Umfangsrichtung erstrecken. Der durch diese Ausnehmungen 9' insgesamt gebildete Entlastungsbereich ist annähernd flächengleich mit der Wirkfläche des Ablaufanschlusses 7. Die Ausnehmungen 9' können wiederum - wie in Fig. 1 - alternativ entweder über Kanäle 10 mit dem Ablaufanschluß oder über Kanäle 11 mit dem Rücklauf verbunden sein.

Bei der Ausführungsform gemäß Fig. 4 sind dem Ablaufanschluß diametral gegenüberliegend und nahe dem Ende der Gehäusebohrung in der Gehäusebohrungswand zum Inneren der Gehäusebohrung und zum Rücklauf R offene Ausnehmungen 16 vorgesehen, die ständig druckentlastet sind.

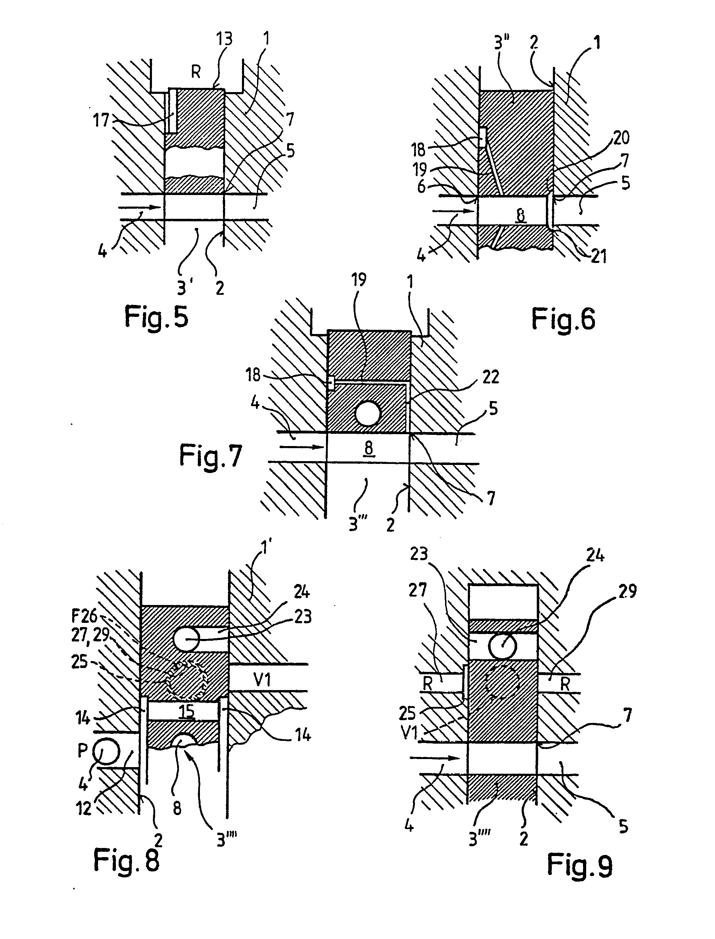

Bei der Ausführungsform von Fig.5 ist in der Gehäusebohrung 2 ein Kolbenschieber 3' verschiebbar gelagert, der an seinem Außenumfang eine sich bis zum Stirnende 13 erstreckende und auch zur Gehäusebohrungswand hin offen Ausnehmung 17 aufweist. Eine gleiche Ausnehmung ist am anderen, nichtdargestellten Ende des Kolbenschiebers 3' vorgesehen. Hierbei bilden die beiden Ausnehmungen 17 den Entlastungsbereich zur Kompensation der Wirkfläche des Ablaufanschlusses 7.

Gemäß Fig. 6 sind an der dem Ablaufanschluß 7 gegenüberliegenden Umfangsseite des Kolbenschiebers 3' taschenförmige Ausnehmungen 18 ausgebildet, die über Kanäle 19 mit dem Durchgangskanal 8 in Verbindung. stehen und den Entlastungsbereich zur Kompensation der drucklosen Wirkfläche des Ablaufanschlusses 7 bilden, wobei sie jedoch in den Durchgangskanal 8 hinein druckentlastet sind. Damit sichergestellt ist, daß der Druckkanal 8 auch tatsächlich drucklos ist, wenn der Kolbenschieber in eine oder aus einer Steuerstellung verschoben wird, ist die dem Ablaufanschluß 7 zugewandte Mündung 21 des Durchgangskanals 8 durch eine kegelige Aufweitung 20 vergrößert, so daß die Verbindung zwischen dem Durchgangskanal 8 und dem Ablaufkanal 5 jeweils voreilend zur Strömungsverbindung zwischen dem Durchgangskanal 8 und dem Druckkanale 4 geöffnet bzw. nacheilend geschlossen wird.

Bei der Ausführungsform gemäß Fig. 7 sind die Ausnehmungen 18 in der Kolbenschieberumfangsfläche über eine Bohrung 19 mit der gegenüberliegenden Seite der Kolbenschieberumfangsfläche und dann über eine längsverlaufende Nut 22 sowohl mit dem Durchgangskanal 8 als auch mit dem Ablaufanschluß 7 ständig verbunden. Dies ist besonders zweckmäßig, wenn das Steuerventil 1 mit mehreren batterieartig zusammengefaßt wird, so daß zumindest der drucklose Durchlauf durch alle vorgesehenen Steuerventile durchgeht. Wenn nämlich dann das in Strömungsrichtung letzte Steuerventil in einer Steuerstellung steht, steht in den Ablaufanschlüssen 7 und den Druckanschlüssen 5 jeweils der volle Arbeitsdruck an. Dieser wirkt dann auch in den Ausnehmungen 18, so daß der Kolbenschieber druckausgeglichen ist und sich leichtgängig aus der Neutralstellung verschieben läßt.

Fig. 8 und 9 zeigen ein Steuerventil, in dessen Gehäuse 1'' (siehe Fig. 9) ein auch die Gehäusebohrung 2 durchsetzender Rücklaufkanal 27,29 vorliegt. Der Rücklaufkanal mündet an der dem Ablufanschluß 7 gegenüberliegenden Seite der Gehäusebohrungswand mit einer kegeligen oder zylindrischen Aufweitung 25 in die Gehäusebohrung, die um eine in Fig. 8 schraffiert angedeutete Ringfläche F,26 größer ist, als die Mündung des Rücklaufkanalabschnittes 29 an der gegenüberliegenden Gehäusebohrungswandseite. Es wird auf diese Weise wiederum ein Entlastungsbereich zur Kompensation der drucklosen Wirkfläche des Ablaufanschlusses 7 gebildet.

Bei dieser Anordnung der Rücklaufkanäle 27 und 29 wird eine wünschenswert kurze Bauweise des Gehäuses und des Kolbenschiebers 3'''' erreicht. Damit jeder Verbraucheranschluß (gezeigt ist nur der Verbraucheranschluß V 1) in einer Steuerstellung, des Kolbenschiebers 3'''' mit den Rücklaufkanälen 27, 29 verbunden ist, besitzt der Kolbenschieber 3'''' eine durchgehende Bohrung 23 in der Ebene des drucklosen Durchlaufes (Fig. 9) sowie eine davon abzweigende Stichbohrung 24, die in einer Steuerstellung des Kolbenschiebers 3'''' vor dem Verbraucheranschluß V 1 steht und das Druckmittel aus ihm in den Rücklauf abströmen läßt. Die Rücklaufkanäle 27, 29 befinden sich im übrigen in der Ebene des drucklosen Durchlaufes, die gegenüber der Arbeitsebene (Fig. 8) um 90 Grad versetzt liegt.

Wenn - wie in Fig. 9 erkennbar - das Gehäuse von zwei Rücklaufkanalabschnitten 27 und 29 durchsetzt wird, und wenn das Steuerventil über zwei Verbraucheranschlüsse und damit zwei solche Rücklaufkanäle verfügt, braucht die Fläche des Entlastungsbereiches F 26 jeweils nur die Hälfte der Wirkfläche des Ablaufanschlusses 7 zu betragen. Ist hingegen nur ein Verbraucheranschluß und ein Rücklaufkanal vorgesehen, so hat die Fläche des Entlastungsbereiches F 26 die gleiche Größe wie die Wirkfläche des Ablaufanschlusses 7.

Wenn hingegen das Steuerventil nur einen Rücklaufkanal 27 aufweist, während der Rücklaufkanalabschnitt 29 weggelassen wurde, ist dafür Sorge zu tragen, daß die Fläche der Mündung des Rücklaufkanals 27 in die Gehäusebohrung (bei nur einem Rücklaufkanal und einem Verbraucheranschluß) gleich groß ist, wie die Wirkfläche des Ablaufanschlusses bzw. (bei zwei Verbraucheranschlüssen und zwei Rücklaufkanälen) jeweils nur halb so groß ist, wie die Wirkfläche des Ablaufanschlusses 7.

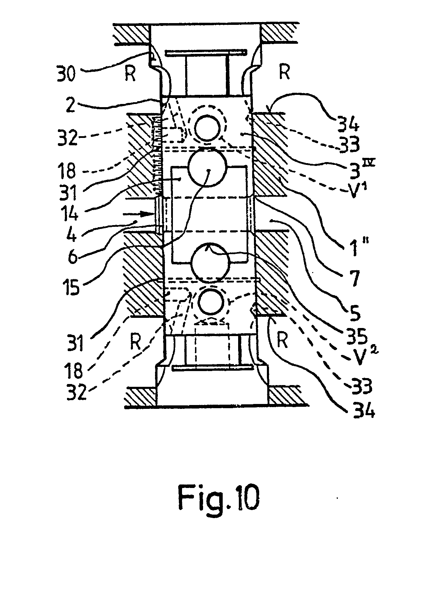

Bei der Ausführungsform von Fig. 10 ist das Gehäuse 1 '' eines Steuerventils in der Ebene des drucklosen Durchlaufes geschnitten. Durch den Druckkanal 4 strömt das Druckmittel über den Durchgangskanal 8 im Kolbenschieber 3$^{IV}$ in den Ablaufkanal 5. Der Kolbenschieber 3$^{IV}$ ist in der Gehäusebohrung 2 verschiebbar und befindet sich in Fig. 10 in der Neutralstellung, d.h. in der Stellung des drucklosen Durchlaufen. Die Strömungstaschen 14 im Kolbenschieber sind über die Kanäle 15 miteinander verbunden. Ferner sind im Kolbenschieber 3$^{IV}$ vor den

Verbraucheranschlüssen V 1 und V 2 Durchgangsbohrungen 35 vorgesehen, die zum Druckausgleich in einer Ebene senkrecht zur Ebene des drucklosen Durchlaufes dienen. Die Enden der Gehäusebohrung 2 sind bei 30 aufgeweitet. Parallel zur Ebene des drucklosen Durchlaufes durchsetzen das Gehäuse 1,2'' Rücklaufkanäle R, die die Gehäusebohrung 2 im Bereich der aufgeweiteten Enden 30 schneiden und innenliegende Kanten 34 definieren, deren Zweck später erläutert wird. In die Gehäusebohrung ist ferner jeweils benachbart zu einem Verbraucheranschluß V 1, V 2 eine umlaufende Druckausgleichsnut 31 eingeschnitten.

Von den den Entlastungsbereich für den Ablaufanschluß 7 bildenden Ausnehmungen 18 im Kolbenschieberumfang führen schräge Bohrungen 32 zu den Stirnenden des Kolbenschiebers, so daß die Ausnehmungen 18 ständig mit dem Druck im Rücklauf R beaufschlagt sind. Den Ausnehmungen 18 in etwa diametral gegenüber und geringfügig zu den Enden des Kolbenschiebers $3^{IV}$ versetzt sind einen den Entlastungsbereich kompensierenden Bereich bildende Ausnehmungen 33 in den Kolbenschieberumfang eingebracht, die hier die Form kegeliger Ansenkungen haben und nach außen offen sind. Jede Ausnehmung 33 überschneidet sich in der Neutralstellung des Kolbenschiebers mit der Kante 34 des Rücklaufes, so daß in der Neutralstellung die Flächenbereiche der Ausnehmungen 33 den kompensierenden Bereich bilden, die sich von der Kante 34 in Richtung zum Ablaufanschluß 5 hin erstrecken. Diese Bereiche haben demzufolge die Form eines Vollkreises abzüglich eines linsenförmigen Bereiches, der sich durch die Überschneidung zwischen der Mündung der Rücklaufkanäle R und dem Umfangskreis der Ausnehmung 33 ergibt.

Insbesondere wenn mehrere derartige Steuerventile mit ihren Gehäusen 1'' batterieartig so aneinandergesetzt sind, daß sich ein durchgehender druckloser Durchlauf aus den fluchtenden Kanälen 4 und 5 sowie ein durchgehender Rücklauf, bestehend aus den Rücklaufkanälen R, ergeben, wird, falls ein in Strömungsrichtung hintenliegendes Steuerventil in eine Steuerstellung verstellt wird, in den Kanälen 4,5 ebenfalls der Arbeitsdruck anstehen. Dieser Arbeitsdruck verteilt sich wie eingangs erläutert in gewissem Maß über den Umfang der Kolbenschieber $3^{IV}$ in den davorliegenden Steuerventilen. Da jedoch der Entlastungsbereich in den Ausnehmungen 18 mit dem Rücklauf R in Verbindung steht, und demzufolge druckentlastet ist, entstünde eine einseitig wirkende Kraft am Kolbenschieber, und zwar an der den Ausnehmungen 18 gegenüberliegenden Kolbenschieberseite, die eine Verstellbewegung des Kolbenschiebers $3^{IV}$ aus der Neutralstellung in eine Steuerstellung spürbar behindern würde. Praktische Versuche zeigen, daß zum Bewegen eines derart verklemmten Kolbenschiebers eine relativ hohe Losbrechkraft aufgebracht werden muß, die eine feinfühlige Verstellung speziell im anfänglichen Bewegungsbereich des Kolbenschiebers aus der Neutralstellung verhindert. Dieser Nachteil wird jedoch dadurch behoben, daß die Ausnehmungen 33 wiederum die Fläche der Ausnehmungen 18 kompensieren, da sie ebenfalls mit dem Rückläufen verbunden und deshalb druckentlastet sind. Es kann sich demzufolge keine einseitig wirkende Kraft am Kolbenschieber aufbauen, so daß sich dieser leicht aus der Neutralstellung verstellen läßt. Daß jeweils eine der Ausnehmungen 33 nach der Anfangsbewegung des Kolbenschiebers aus der Neutralstellung nicht mehr mit dem Rücklauf verbunden ist, spielt in weiterer Folge keine Rolle, da dann der Kolbenschieber sich ohnedies leicht bewegen läßt.

Die Ausnehmungen 18 sind bei dieser Ausführungsform als Bohrungen zu den Kanälen 32 ausgebildet. Um Platz in Kolbenschieberlängsrichtung zu sparen, könnten ähnlich wie bei den Schlitzen 9 von Fig. 3 mehrere kleine radiale Stichbohrungen in Umfangsrichtung nebeneinandergesetzt sein, die insgesamt die notwendige Fläche für den Kompensationsbereich ergeben. Diese Bohrungen stünden dann mit dem Kanal 32 in Verbindung.

**Patentansprüche**

1. Hydraulisches Steuerventil, insbesondere für ein Hochdruck-Hydraulik-System in dem mehrere Steuerventile batterieartig zusammengefaßt sind, mit einem Gehäuse (1, 1', 1''), in dem in einer Gehäusebohrung (2) ein Kolbenschieber (3, 3', 3'', 3''', 3'''',$3^{IV}$) aus einer Neutralstellung mit drucklosem Durchlauf zur Arbeitsströmungssteuerung in wenigstens eine Steuerstellung verschiebbar ist, und mit einem Druckanschluß (4) zur Gehäusebohrung, einem darauf ausrichtbaren Durchgangskanal (8) im Kolbenschieber und einem Ablaufanschluß (5), der in der Stellung für drucklosen Durchlauf über den Durchgangskanal mit dem Druckanschluß verbunden ist, dadurch gekennzeichnet, daß dem Ablaufanschluß (5) wenigstens ein die Wirkfläche des Ablaufanschlusses kompensierender Entlastungsbereich (9, 9', 16, 17, 18, F 26) für die Kolbenschieberumfangsfläche im wesentlichen diametral gegenüberliegt, dessen Wirkfläche der Wirkfläche des Ablaufanschlusses (7) annähernd gleich ist.

2. Steuerventil nach Anspruch 1, dadurch gekennzeichnet, daß an der dem Ablaufanschluß (7) gegenüberliegenden Gehäusebohrungswand in Bohrungslängsrichtung symmetrisch versetzt zwei zur Gehäusebohrung (2) offene Ausnehmungen (9, 9') vorgesehen sind, die über im Gehäuse (1) verlaufenden Kanäle (10) mit dem Ablaufanschluß (7) verbunden sind.

3. Steuerventil nach den Ansprüchen 1 und 2, dadurch gekennzeichnet, daß - in axialer Richtung- der zwischen dem Druckanschluß (6) und jeder Ausnehmung (9, 9') in der Gehäusebohrungswand vorliegende Abstand größer ist, als der Hubweg des Kolbenschiebers (3) zwischen der Neutralstellung und jeder Steuerstellung (I, II).

4. Steuerventil nach Anspruch 1, dadurch gekennzeichnet, daß in der Umfangsfläche des Kolbenschiebers (3) Ausnehmungen (18) ausgebildet sind, die über Kanäle (19, 22) im Kolbenschieber mit dem Durchgangskanal (8) verbunden sind.

5. Steuerventil nach Anspruch 4, dadurch gekennzeichnet, daß in der neutralstellung des Kolbenschiebers und in axialer Richtung gesehen der zwischen der dem Druckanschluß (6) zugeordneten Mündung des Durchgangskanals (8) und jeder Ausnehmung (16, 17, 18) in der Kolbenschieberumfangsfläche vorgesehene Abstand größer ist, als der Hubweg des Kolbenschiebers (3, 3') zwischen der Neutralstellung (N) und jeder Steuerstellung (I, II).

6. Steuerventil nach den Ansprüchen 1,4 und 5, dadurch gekennzeichnet, daß die dem Ablaufanschluß (7) zugewandte Mündung (21) des Durchgangskanals (8) - in axialer Richtung gesehen - weiter ist, als die dem Druckanschluß (6) zugewandte Mündung des Durchgangskanals (8).

7. Steuerventil nach wenigstens einem der Ansprüche 1 bis 6, wobei für die Arbeitsströmung ein Pumpenanschluß (12) zur Gehäusebohrung (2), wenigstens ein Verbraucheranschluß (V₁, V1, V2) im Kolbenschieber angeordnete Strömungsführungskanäle (14, 15) und ein dem Verbraucheranschluß zugeordneter Rücklauf (R) vorgesehen sind, dadurch gekennzeichnet, daß die Ausnehmung (9, 9', 16, 18) mit dem benachbarten Rücklauf (R) in Verbindung stehen.

8. Steuerventil nach wenigstens einem der Ansprüche 1 bis 7, wobei die Enden der Gehäusebohrung (2) die den Verbraucheranschlüssen (V1, V2) zugeordneten Rückläufe (R) bilden, die gegenüber den Verbraucheranschlüssen durch die Stirnenden (13) des Kolbenschiebers (3) abtrennbar sind, dadurch gekennzeichnet, daß die Ausnehmungen (16) in der Gehäusebohrung (2) mit den Enden der Schieberbohrung (2) oder die Ausnehmungen (17, 18) im Kolbenschieberumfang mit den benachbarten Stirnenden (13) des Kolbenschiebers bzw. dem jeweiligen Rücklauf verbunden sind.

9. Steuerventil nach wenigstens einem der vorhergehenden Ansprüche, dadurch gekennzeichnet, daß jede Ausnehmung (9, 18) ein sich über einen größeren Umfangsbereich der Gehäusebohrungswand bzw. der Umfangsfläche des Kolbenschiebers in Umfangsrichtung erstreckender Schlitz mit geringer axialer Breite ist oder aus mehreren kleinen Radialbohrungen besteht.

10. Steuerventil nach wenigstens einem der Ansprüche 1 bis 9, wobei in der Ebene des drucklosen Durchlaufs im Gehäuse (1') jedem Verbraucheranschluß (V1) ein die Gehäusebohrung (2) durchsetzender durchgehender Rücklaufkanal (27) zugeordnet ist, der in der selben Axialebene wie der Verbraucheranschluß liegt, und wobei im Kolbenschieber (3'''') ein Strömungskanal (23, 24) ausgebildet ist, der in jeder Steuerstellung des Kolbenschiebers einen Verbraucheranschluß mit dem Rücklaufkanal verbindet, dadurch gekennzeichnet, daß die dem Ablaufanschluß (7) diametral gegenüberliegende Mündung (25) des Rücklaufkanals (27) in die Gehäusebohrung (2) um einen Entlastungsbereich (F 26) größer ausgebildet ist, als die an der Seite des Ablaufanschlusses (7) liegende Mündung des Rücklaufkanals (29) in der Gehäusebohrung, wobei die Größe des Entlastungsbereiches (F 26) - bei nur einem Rücklaufkanal - der Wirkfläche des Ablaufanschlusses (7) entspricht - während sie - bei zwei Rücklaufkanälen für zwei Verbraucheranschlüsse - jeweils der Hälfte der Wirkfläche des Ablaufanschlusses (7) entspricht.

11. Steuerventil nach wenigstens einem der Ansprüche 1 bis 10, dadurch gekennzeichnet, daß entweder in der Gehäusebohrung (2) oder in der Kolbenschieberumfangsfläche diemetral gegenüber dem Entlastungsbereich (9, 9', 16, 17, 18) ein die Wirkfläche des Entlastungsbereichs kompensierender Bereich (33) vorgesehen ist, der zumindest in der Neutralstellung (N) des Kolbenschiebers (3) mit im Rücklauf (R) herrschenden Druck beaufschlagbar ist.

12. Steuerventil nach Anspruch 11, dadurch gekennzeichnet, daß der kompensierende Bereich aus offenen Ausnehmungen im Kolbenschieberumfang gebildet ist, die sich in der Neutralstellung des Kolbenschiebers mit dem Rücklauf überschneiden.

13. Steuerventil nach wenigstens einem der Ansprüche 1 bis 12, wobei benachbart zu jedem Verbraucheranschluß (V1, V2) zwischen dem Verbraucheranschluß (V1, V2) und dem Pumpenanschluß wenigstens eine umlaufende Druckausgleichsnut (31) in der Gehäusebohrungswand vorgesehen ist, dadurch gekennzeichnet, daß sowohl die den Entlastungsbereich bildenden Ausnehmungen im Kolbenschieberumfang als auch die den kompensierenden Bereich bildenden Ausnehmungen (33) Kolbenschieberumfang jeweils bis in einen axialen Bereich des Kolbenschieberumfanges reichen, mit dem dieser bei einer Bewegung in eine Steuerstellung wenigstens eine Druckausgleichsnut (31) überfährt.

## Claims

1. A hydraulic control valve, particularly for a high-pressure hydraulic system in which a plurality of control valves are combined in the form of a battery, comprising a housing (1, 1', 1") formed with a housing bore (2) in which a valve piston (3, 3', 3',' 3''', 3'''', 3IV) is displaceable from a neutral position for zero-pressure through-flow to at least one control position, further comprising a pressure inlet (4) leading to said housing bore, a through-passage (8) in said valve piston adapted to be aligned with said pressure inlet, and a pressure outlet (5) communicating with said pressure inlet through said through-passage in said zero-pressure through-flow position, characterized in that substantially diametrically opposite said pressure outlet (5) there is formed at least one relief area (9, 9', 16, 17, 18, F26) for the peripheral surface of said valve piston for compensating the effective area of said pressure outlet, the effective area of said relief area being approximately equal to the effective area of said pressure outlet (7).

2. A control valve according to claim 1, characterized in that opposite said pressure outlet (7) the wall of said housing bore is formed with two recesses (9, 9') at symmetrically offset positions in the longitudinal direction of said bore (2), said recesses communicating with said pressure outlet (7) through passages (10) extending in said housing (1).

3. A control valve according to claims 1 and 2, characterized in that the axial distance between said pressure inlet (4) and each of said recesses (9, 9') in said housing bore wall is greater than the stroke of said valve piston (3) between its neutral position and each control position (I, II).

4. A control valve according to claim 1, characterized in that the peripheral surface of said valve piston (3) is formed with recesses (18) communicating with said through-passage (8) through passages (19, 22) within said valve piston.

5. A control valve according to claim 4, characterized in that in the neutral position of said valve piston, the axial distance between the opening of said through-passage (8) facing towards said pressure inlet (4) and each recess (16, 17, 18) in the peripheral surface of said valve piston is greater than the stroke of said valve piston (3, 3') between its neutral position (N) and each control position (I, II).

6. A control valve according to claims 1, 4 and 5, characterized in that the opening (21) of said through-passage (8) facing towards said pressure outlet (7) is of greater width - as seen in the axial direction - than the opening of said through-passage (8) facing towards said pressure inlet (4).

7. A control valve according to at least one of claims 1 to 6, wherein for the working fluid flow there is provided a pump inlet (12) leading to said housing bore (2), at least one connector passage (V₁, VI, V2) for connection to a consumer, fluid flow passages (14, 15) formed in said valve piston, and a return passage (R) associated with said connector passage, characterized in that said recess (9, 9', 16, 18) communicates with said return passage (R) located adjacent thereto.

8. A control valve according to at least one of claims 1 to 7, wherein the ends of said housing bore (2) form said return passages (R) associated with said connector passages (V1, V2) and adapted to be isolated from said connector passages by the end faces (13) of said valve piston (3), characterized in that said recesses (16) in said housing bore (2) communicate with the ends of said piston bore (2), or the recesses (17, 18) in the periphery of said valve piston communicate with the adjacent ends (13) of said valve piston, or with the associated return passage, respectively.

9. A control valve according to at least one of the preceding claims, characterized in that each recess (9, 18) comprises a slot of a small axial width extending over a substantial peripheral portion of the housing bore wall, or of the peripheral surface of said valve piston in the peripheral direction, respectively, or consists of a plurality of small radial bores.

10. A control valve according to at least one of claims 1 to 9, wherein in the zero-pressure through-flow plane in said housing (1') each connector passage (V1) has associated therewith a continuous return passage (27) extending through said housing bore (2) and disposed in the same axial plane as the respective connector passage, and wherein said valve piston (3'''') is formed with an interior flow passage (23, 24) for connecting a connector passage to said return passage in each control position of said valve piston, characterized in that the opening (25) of said return passage (27) into said housing bore (2) disposed diametrally opposite said pressure outlet (7) has its size increased by a relief area (F 26) over that of the opening of the return channel (29) in said housing bore at the side of said pressure outlet (7), the size of said relief area (F 26) - in the case of only one return passage - corresponding to the effective area of said pressure outlet (7), while - in the case of two return passages for two connector passages - corresponding each to one-half of the effective area of said pressure outlet (7).

11. A control valve according to at least one of claims 1 to 10, characterized in that either said housing bore (2) or the perpheral surface of said valve piston is formed with an area (33) diametrally opposite said relief area (9, 9', 16, 17, 18) for compensating the effective area of said relief area, said compensating area being adapted to be subjected to the pressure prevailing in said return passage (R) at least in the neutral position of said valve piston (3).

12. A control valve according to claim 11, characterized in that said compensating area is formed by open recesses in the periphery of said valve piston intersecting said return passage in the neutral position of said valve piston.

13. A control valve according to at least one of claims 1 to 12, wherein the housing bore wall is formed with at least one circumferential pressure compensating groove (31) adjacent each connector passage (V₁, V2) between said connector passage (V₁, V2) and said pump inlet, characterized in that both the recesses in the periphery of said valve piston forming said relief area and the recesses (33) in the periphery of said valve piston forming said compensating area extend to an axial location of the periphery of said valve piston passing over at least one pressure compensating groove (31) on displacement of said valve piston to one of its control positions.

## Revendications

1. Soupape de commande hydraulique, notamment pour un système hydraulique à haute pression dans lequel plusieurs soupapes de commande sont groupées en batterie, avec un corps (1, 1', 1'') dans lequel, dans un alésage de corps (2), un tiroir à piston (3, 3', 3'', 3''', 3'''', 3$^{IV}$) peut être déplacé d'une position neutre avec un passage sans pression pour la commande d'un écoulement de travail à au moins une position de commande, et avec un raccord sous pression (4) pour le raccordement à l'alésage de corps (2), un canal de passage (8) dans ledit tiroir à piston pouvant être aligné sur le raccord sous pression (4), et un raccord de départ (7) qui, dans la position pour le passage sans pression, est relié au raccord sous pression (4) par le canal de passage (8), caractérisée en ce qu'essentiellement diamétralement opposée au raccord de départ (7) se trouve au moins une zone de décharge (9, 9', 16, 17, 18, F26) pour la surface périphérique dudit tiroir à piston, qui compense la surface d'action du raccord de départ (7) et dont la surface d'action est approximativement égale à celle de ce raccord de départ (7).

2. Soupape de commande selon la revendication 1, caractérisée en ce que, dans la paroi de l'alésage de corps (2) opposée au raccord de départ (7), deux évidements (9, 9') ouverts vers l'alésage de corps (2) et décalés symétriquement dans la direction longitudinale de cet alésage sont prévus et reliés au raccord de départ (7) par des canaux (10) qui s'étendent dans le corps (1).

3. Soupape de commande selon les revendications 1 et 2, caractérisée en ce que - dans la direction axiale - l'écartement entre le raccord sous pression (4) et chaque évidement (9, 9') dans la paroi de l'alésage de boîtier (2) est plus grand que la course du tiroir à piston (3) entre la position neutre et chaque position de commande (I, II).

4. Soupape de commande selon la revendication 1, caractérisée en ce que, dans la surface périphérique du tiroir à piston (3), il est prévu des évidements (18) qui sont raccordés au canal de passage (8) par des canaux (19, 22) ménagés dans le tiroir à piston.

5. Soupape de commande selon la revendication 4, caractérisée en ce que, dans la position neutre du tiroir à piston (3, 3') et vu dans la direction axiale, l'écartement prévu entre l'orifice, du canal de passage (8), associé au raccord sous pression (4) et chaque évidement (16, 17, 18) est plus grand que la course du tiroir à piston (3, 3') entre la position neutre (N) et chaque position de commande (I, II).

6. Soupape de commande selon les revendications 1, 4 et 5, caractérisée en ce que l'orifice (21) du canal de passage (8) tourné vers le raccord de départ (7) - vu dans la direction axiale - est plus large que l'orifice de ce canal tourné vers le raccord sous pression (4).

7. Soupape de commande selon au moins une des revendications 1 à 6 dans laquelle, pour l'écoulement de travail, il est prévu un raccord pour une pompe (12) pour raccorder une pompe à l'alésage de corps (2), au moins un raccord pour un récepteur (V1, V2), des canaux de guidage d'écoulement (14, 15) disposés dans le tiroir à piston (3) et un retour (R) associé audit raccord pour un récepteur, caractérisée en ce que les évidements (9, 9', 16, 18) sont raccordés au retour (R) voisin.

8. Soupape de commande selon au moins une des revendications 1 à 7, dans laquelle les extrémités de l'alésage de corps (2) forment les retours (R) associés aux raccords pour des récepteurs (V1, V2), qui peuvent être séparés de ces raccords par les faces extrêmes (13) du tiroir à piston (3), caractérisée en ce que les évidements (16) ménagés dans l'alésage de corps (2) sont raccordés aux extrémités de cet alésage, ou que les évidements (17, 18) ménagés dans la périphérie dudit tiroir à piston sont raccordés aux faces extrêmes voisines (13) de ce tiroir ou au retour respectif.

9. Soupape de commande selon au moins une des revendications précédentes, caractérisée en ce que chaque évidement (9, 18) est une fente de faible largeur s'étendant dans la direction périphérique sur une zone périphérique relativement grande de la paroi de l'alésage de corps (2) ou de la surface périphérique du tiroir à piston (3) ou est formé de plusieurs petits trous forés radisux.

10. Soupape de commande selon au moins une des revendications 1 à 9, dans laquelle, dans le plan du passage sans pression dans le corps (1'), à chaque raccord pour un récepteur (V1), un canal de retour (27) traversant est associé et disposé dans le même plan axial que le raccord pour un récepteur, un canal d'écoulement (23, 24) étant prévu dans le tiroir à piston (3'''') pour relier un raccord pour un récepteur au canal de retour (27) dans chaque position de commande de ce tiroir, caractérisée en ce que l'orifice (25), diamétralement opposé au raccord de départ (7), du canal de retour (27) ménagé dans l'alésage de corps (2) est plus grand, de la valeur d'une zone de décharge (F26), que l'orifice du canal de retour (29) ménagé dans l'alésage de corps (2) situé sur le côté du raccord de départ (7), l'aire de la zone de décharge (F26) étant égale à la surface d'action du raccord de départ (7) dans le cas d'un seul canal de retour ou à la moitié de cette surface dans le cas de deux canaux de retour pour deux raccords pour des récepteurs (V1, V2).

11. Soupape de commande selon au moins une des revendications 1 à 10, caractérisée en ce que, soit dans l'alésage de corps (2) ou dans la surface périphérique du tiroir à piston (3), diamétralement opposée à la zone de décharge (9, 9', 16, 17, 18), il est prévu une zone (33) qui compense la surface d'action de la zone de décharge et qui, au moins dans la position neutre (N) du tiroir à piston (3), peut être soumise à la pression qui règne dans le retour (R).

12. Soupape de commande selon la revendication 11, caractérisée en ce que la zone compensatrice est formée d'évidements ouverts ménagés dans la périphérie du tiroir à piston (3), qui chevauchent le retour (R) dans la position neutre de ce tiroir.

13. Soupape de commande selon au moins une des revendications 1 à 12, dans laquelle, près de chaque raccord pour un récepteur (V1, V2), il est prévu au moins une rainure de compensation de pression (31) dans la paroi de l'alésage de corps (2) entre ce raccord et le raccord pour une pompe, caractérisée en ce que non seulement les évidements dans la périphérie du tiroir à piston (3) qui forment la zone de décharge, mais aussi les évidements (33) dans la périphérie de ce tiroir qui forment la zone compensatrice, s'étendent chacun jusque dans une zone axiale de la périphérie dudit tiroir avec laquelle celui-ci passe au-dessus d'au moins une rainure de compensation de pression (31) lors d'un mouvement de la position neutre (N) à une position de commande.

Fig. 1

Fig. 2

Fig. 3

Fig. 4

Fig.5

Fig.6

Fig.7

Fig.8

Fig.9

Fig.10